(19) **Europäisches Patentamt / European Patent Office / Office européen des brevets**

(11) **EP 3 862 317 A1**

(12) **EUROPÄISCHE PATENTANMELDUNG**

(43) Veröffentlichungstag:
**11.08.2021 Patentblatt 2021/32**

(21) Anmeldenummer: **20155928.3**

(22) Anmeldetag: **06.02.2020**

(51) Int Cl.:
*C01B 32/80* (2017.01)       *B01J 7/00* (2006.01)
*B01J 12/00* (2006.01)       *B01J 8/00* (2006.01)
*B01J 8/06* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **BASF SE**
**67056 Ludwigshafen am Rhein (DE)**

(72) Erfinder: **Die Erfindernennung liegt noch nicht vor**

(74) Vertreter: **BASF IP Association**
**BASF SE**
**GBI-C006**
**67056 Ludwigshafen (DE)**

(54) **VERFAHREN UND REAKTOR ZUR HERSTELLUNG VON PHOSGEN**

(57) Die Erfindung betrifft ein Verfahren zur Herstellung von Phosgen durch Gasphasenreaktion von Kohlenmonoxid und Chlor in Gegenwart eines Katalysators in einem Reaktor, der eine Vielzahl von parallel zueinander angeordneten Kontaktrohren umfasst, die mit dem Katalysator befüllt sind und die von wenigstens einem fluiden Wärmeträger umströmt werden, wobei man einen Feedstrom eines Gemisches eines Chlor-Einsatzstroms und eines Kohlenmonoxid-Einsatzstroms an einer Einlassende der Kontaktrohre in die Kontaktrohre leitet, in den Kontaktrohren zu einem Phosgen enthaltenden Produktgasgemisch reagieren lässt, und das Produktgasgemisch an einem Auslassende der Kontaktrohre aus den Kontaktrohren abführt. Das erfindungsgemäße Verfahren ist dadurch gekennzeichnet, dass man die Gasphasenreaktion in dem Reaktor derart durchführt, dass sich die Position der höchsten Temperatur in einem Kontaktrohr (Hot-Spot) mit einer vorgegebenen Wanderungsgeschwindigkeit entlang der Längsachse des Kontaktrohrs bewegt. Die Erfindung betrifft auch einen Reaktor zur Durchführung des Verfahrens.

*Fig. 1*

EP 3 862 317 A1

**Beschreibung**

Die Erfindung betrifft ein Verfahren und einen Reaktor zur Herstellung von Phosgen durch Gasphasenreaktion von Kohlenmonoxid und Chlor in Gegenwart eines Katalysators, insbesondere in Gegenwart eines Aktivkohlekatalysators.

Phosgen ist ein wichtiger Hilfsstoff bei der Herstellung von Zwischen- und Endprodukten in nahezu allen Zweigen der Chemie. Insbesondere stellt Phosgen ein weit verbreitetes Reagens für die industrielle Carbonylierung, beispielsweise bei der Herstellung von Isocyanaten oder organischen Säurechloriden dar. Das mengenmäßig größte Verwendungsgebiet ist dabei die Herstellung von Diisocyanaten für die Polyurethanchemie, insbesondere Toluylendiisocyanat oder 4,4-Diisocyanat-Diphenylmethan.

Phosgen wird großtechnisch in einer katalytischen Gasphasenreaktion von Kohlenmonoxid und Chlor in Gegenwart eines Katalysators, beispielsweise eines Aktivkohlekatalysators, gemäß der Reaktionsgleichung:

$$CO + Cl_2 \rightleftarrows COCl_2$$

hergestellt. Die Reaktion ist stark exotherm mit einer Reaktionsenthalpie $\Delta H$ von -107,6 kJ/mol. Die Reaktion wird üblicherweise in einem Rohrbündelreaktor nach dem in Ullmann's Encyclopedia of Industrial Chemistry im Kapitel "Phosgen"(5th Ed. Vol. A 19, p 413 ff., VCH Verlagsgesellschaft mbH, Weinheim, 1991) beschriebenen Verfahren hergestellt. In dem Verfahren wird körniger Katalysator mit einer Korngröße im Bereich von 3 bis 10 mm, vorzugsweise 3,5 bis 7 mm, in Kontaktrohren mit einem typischen Innendurchmesser von bis zu 100 mm, typischerweise zwischen 35 und 70 mm und bevorzugt zwischen 39 und 45 mm, eingesetzt. Die länglichen Kontaktrohre weisen eine Längsachse auf, wobei die in Richtung der Längsachse gemessene Länge der Kontaktrohre bei der Phosgenproduktion im industriellen Maßstab typischerweise im Bereich von 1,5 m bis 12 m liegt. Die Kontaktrohre werden üblicherweise bis auf kurze Abschnitte am Beginn und am Ende der Rohre mit Katalysatormaterial gefüllt, so dass die Schüttungshöhe des Katalysatormaterials im Wesentlichen der Länge der Kontaktrohre entspricht. Die Reaktion beginnt typischerweise bei Temperaturen von 40 bis 120 °C im Bereich des Eintritts der Reaktionsedukte in das Katalysatormaterial. In Strömungsrichtung der Edukte steigt die Temperatur in den Rohren entlang der Längsachse der Rohre mit zunehmender Entfernung von der Gaseintrittsöffnung rasch an und erreicht typischerweise noch in der ersten Rohrhälfte (betrachtet vom Eintritt der gasförmigen Edukte aus) ein Temperaturmaximum, das typischerweise bei 400 °C und mehr liegt und bis zu 600 °C betragen kann. Diese Stelle der höchsten Temperatur entlang der Längsachse eines Kontaktrohres wird auch als "Hot-Spot"bezeichnet. Danach fällt die Temperatur im weiteren Verlauf des Kontaktrohres schnell wieder ab, da auf Höhe des Hot-Spots ein Großteil des eingesetzten Chlorgases bereits umgesetzt ist und im weiteren Verlauf der Kontaktrohre immer weniger Chlorgas für die Phosgenbildung zur Verfügung steht. Bei der Reaktion wird üblicherweise Kohlenmonoxid im Überschuss eingesetzt, um zu gewährleisten, dass das gesamte Chlor über die Länge der Kontaktrohre umgesetzt und weitgehend chlorfreies Phosgen erzeugt wird, da Chlor bei der anschließenden Verwendung von Phosgen zu unerwünschten Nebenreaktionen führen kann.

Die Reaktion kann drucklos durchgeführt werden, wird jedoch in der Regel bei einem Überdruck von 3 bis 7 bar durchgeführt. In diesem Druckbereich kann das gebildete Phosgen nach dem Reaktor mit Kühlwasser oder anderen, beispielsweise organischen Wärmeträgern kondensiert werden, so dass der Kondensator wirtschaftlicher betrieben werden kann.

Ein typischer großtechnischer Reaktor zur Herstellung von Phosgen wird beispielsweise in der internationalen Patentanmeldung WO 03/072237 A1 der Anmelderin beschrieben.

Ein wesentliches Problem bei der Auslegung von Phosgenreaktoren stellt die Abfuhr der entstehenden Reaktionswärme dar. Die Kontaktrohre des Rohrbündelreaktors werden dazu von einem Wärmeträger umspült, der die entstehende Reaktionswärme aus dem Reaktor austrägt. Es hat sich gezeigt, dass bei einer Queranströmung der Kontaktrohre die Wärmeabfuhr verbessert wird. Daher werden üblicherweise Umlenkbleche in dem Reaktor eingebaut, die durch eine mäanderförmige Strömungsführung des Wärmeträgers eine Queranströmung der Kontaktrohre durch den Wärmeträger ermöglichen. Der Wärmeträger kann eine unter den gegebenen Reaktionsbedingungen siedenden oder nicht-siedenden Flüssigkeit sein. Im Fall einer Siedekühlung, wie sie beispielsweise in der europäischen Patentanmeldung EP 01 34 506 A2 beschrieben ist, setzt man vorzugsweise eine unter den gegebenen Druckbedingungen bei typischerweise 150 bis 320 °C siedende Flüssigkeit ein, die im Kreislauf über einen üblicherweise wassergekühlten Wärmetauscher geführt wird. In einem Reaktor können auch Flüssigkeitskühlung und Siedekühlung kombiniert werden.

Aufgrund der Kühlung der Kontaktrohre entsteht neben dem oben beschriebenen Temperaturprofil in Längsrichtung der Kontaktrohre auch ein Temperaturprofil im Querschnitt der Kontaktrohre. Typischerweise werden die höchsten Temperaturen im Zentrum des Kontaktrohrs erreicht und die Temperatur fällt zur Innenwand des Kontaktrohrs hin ab. In der Schüttung bildet sich dann im Querschnitt senkrecht zur Längsachse ein Temperaturprofil aus, das typischerweise die Form einer umgekehrten Parabel mit Maximum im Zentrum aufweist. Der Abtransport der Reaktionswärme durch das Kühlmedium wird durch den Wandwärmeübergang vom Reaktionsgemisch und Katalysatormaterial an der Innenwand des Kontaktrohrs, der Wärmeleitung des Mantelmaterials des Kontaktrohres und dem Wärmeübergang zum Kühlmedium hin an der Außenwand des Kontaktrohres bestimmt. Hier spielen insbesondere die Wärmeleitfähigkeit des Kontaktrohrmaterials, die Temperatur, Strömungsgeschwindigkeit und Reynolds-Zahl von Reaktionsgas bzw. Kühlmedium eine Rolle, aber auch die Wärmeleitfähigkeit des in dem Kontaktrohr befindlichen Katalysatormaterials.

Bei Reaktoren im großtechnischen Maßstab kommt es über den Reaktorquerschnitt zu größeren Unterschieden der Wärmeübergangskoeffizienten an den Grenzschichten zwischen den Kontaktrohren und dem Wärmeträger, die beispielsweise verursacht werden durch die Umlenkung des Wärmeträgers von der Quer- in die Längsströmung, aber auch durch Druckverluste des im Mantelraum strömenden Wärmeträgers. Die Wärmeübergangskoeffizienten von Bereichen mit gutem Wärmeübergang und Bereichen mit schlechtem Wärmeübergang innerhalb des Reaktionsquerschnittes des Reaktors können sich dabei durchaus um den Faktor 2 unterscheiden. Dementsprechend werden die Kontaktrohre in den Bereichen mit schlechtem Wärmeübergang schlechter gekühlt. Zu einer Erhöhung der thermischen Belastung des Wandmaterials der Kontaktrohre trägt außerdem bei, wenn das verwendete Katalysatormaterial eine hohe Wärmeleitfähigkeit aufweist, wie dies beispielsweise bei Aktivkohlen als Katalysatormaterialien der Fall ist. Insbesondere im Bereich des Hot-Spots, der wie oben geschildert, im Zentrum eines Kontaktrohres Temperaturen bis zu 600 °C aufweisen kann, können trotz Kühlung deutlich erhöhte Wandtemperaturen der Kontaktrohre auftreten. Zu einer erhöhten thermischen Belastung der Kontaktrohre kann es auch im Teillastbetrieb kommen, da aufgrund der schlechteren Wärmeabfuhr größere Hot-Spots entstehen In Verbindung mit der chlorhaltigen Atmosphäre kann es daher bei längerfristiger Einwirkung hoher Temperaturen auf die Wand der Kontaktrohre zu Korrosionserscheinungen kommen. Die Auswirkungen hängen im Wesentlichen vom verwendeten Wandmaterial ab. Die Empfindlichkeit für solche Korrosionsschäden ist für Kontaktrohre aus Nickelbasislegierung am geringsten und steigt über Materialien wie Edelstähle, Duplexstähle hin zu Schwarzstählen an. Die Korrosionsrate in Chloratmosphären in Abhängigkeit von der Temperatur ist für unterschiedliche Materialien im Allgemeinen bekannt (siehe beispielsweise "Materials Selector for Hazardous Chemical, Vol. 3, Hydrochloric Acid, Hydrogen Chloride and Chlorine", MIT Publication MS-3, Elsevier Science).

Diese Korrosionsschäden können bis zu einer Leckage zwischen Produkt- und Kühlmittelseite und damit zu sicherheitskritischen Zuständen im Reaktor führen. Bei Verwendung von Wasser als Kühlmedium kann im Kontakt mit Phosgen wässrige HCl erzeugt werden, was wiederum zu Korrosionsschäden an weiteren Anlagenteilen führt. Insbesondere wird beim Auftreten der Korrosionsschäden bzw. der Leckage ein Abstellen der Produktionsanlage und eine Reparatur bzw. sogar ein Austausch des Reaktors erforderlich, was mit hohen Kosten durch Produktionsausfall und Investitionen verbunden ist.

Daher geht man bei der Auslegung von Reaktoren üblicherweise davon aus, dass die Kontaktrohre, abhängig vom eingesetzten Werkstoff, eine maximale Temperaturbelastung aufweisen dürfen. Für den für die Kontaktrohre häufig verwendeten Duplexstahl liegt die maximale Temperaturbelastung typischerweise im Bereich von etwa 170 bis 200 °C, für Edelstähle bei etwa 250 °C. Eine Auslegung der Betriebsbedingungen des Reaktors, die auf die Einhaltung der maximalen Temperaturbelastung der Kontaktrohrwände im oben genannten Bereich abzielt, limitiert jedoch den Durchsatz und damit die Kapazität des Reaktors auf den gewählten Auslegungswert.

Der Durchsatz des Reaktors kann dabei über die sogenannte Flächenlast oder Phosgenlast des Reaktors spezifiziert werden, die definiert ist als die Menge an produziertem Phosgen pro Zeiteinheit (üblicherweise angegeben in kg/s), bezogen auf die Querschnittfläche des Katalysators, also die Summe der Innenquerschnittsflächen der katalysatorbefüllten Kontaktrohre (üblicherweise angegeben in Quadratmeter). Zur Beherrschung der Reaktionswärme werden daher im Stand der Technik üblicherweise Flächenlasten zwischen 0,5 und 2 kg Phosgen/$m^2$s gefahren. Die Phosgen-Flächenlast wird also im Wesentlichen unter der Annahme eines vollständigen Umsatzes der in Unterlast gefahrenen Komponente bestimmt, also beispielsweise bei Kohlenmonoxidüberschuss im Wesentlichen durch den Chlor-Feed.

Der Begriff "Reaktor" umfasst in der vorliegenden Anmeldung alle Teile einer Anlage, in denen die chemische Umsetzung von Kohlenmonoxid und Chlorgas zu Phosgen stattfindet. Häufig ist ein Reaktor in diesem Sinne eine einzelne Komponente, die durch einen Reaktorbehälter definiert ist. Ein Reaktor im Sinne der vorliegenden Anmeldung kann jedoch auch zwei oder mehre Komponenten mit separaten Reaktorbehältern umfassen, die beispielsweise hintereinander (seriell) angeordnet sind. In diesem Fall bezieht sich die Flächenlast auf den Gesamtumsatz, also auf den Phosgenstrom, der die letzte Reaktorkomponente, z.B. den letzten Reaktorbehälter, verlässt.

Der vorliegenden Erfindung liegt das technische Problem zugrunde, ein Verfahren zur Herstellung von Phosgen bereitzustellen, das einen erhöhten Durchsatz des Reaktors ermöglicht, ohne die Gefahr von Reaktorschäden durch erhöhte thermische Belastung der Kontaktrohre zu erhöhen. Die Erfindung betrifft außerdem einen Reaktor zur Durchführung des erfindungsgemäßen Verfahrens.

Gelöst wird dieses technische Problem durch das Verfahren des vorliegenden Anspruchs 1. Vorteilhafte Weiterbildungen des erfindungsgemäßen Verfahrens sind Gegenstand der abhängigen Ansprüche.

Die vorliegende Erfindung betrifft daher ein Verfahren zur Herstellung von Phosgen durch Gasphasenreaktion von Kohlenmonoxid und Chlor in Gegenwart eines Katalysators in einem Reaktor, der eine Vielzahl von parallel zueinander angeordneten Kontaktrohren umfasst, die mit dem Katalysator befüllt sind und die von wenigstens einem fluiden Wärmeträger umströmt werden, wobei man einen Feedgasstrom (oder kurz "Feedstrom") eines Gemisches eines Chlor-Einsatzstroms und eines Kohlenmonoxid-Einsatzstroms an einem Einlassende der Kontaktrohre in die Kontaktrohre leitet und in den Kontaktrohren zu einem Phosgen enthaltenden Produktgasgemisch reagieren lässt, und das Produktgasgemisch an einem Auslassende der Kontaktrohre aus den Kontaktrohren abführt. Das erfindungsgemäße Verfahren ist dadurch gekennzeichnet, dass man die Gasphasenreaktion in dem Reaktor derart durchführt, dass sich die Position der höchsten Temperatur in einem Kontaktrohr, also der sog. Hot-Spot, mit einer vorgegebenen Wanderungsgeschwindigkeit entlang der Längsachse des Kontaktrohrs bewegt.

Wie oben bereits beschrieben, zeichnen sich die im Rahmen der vorliegenden Erfindung betrachteten katalytischen Gasphasenreaktionen dadurch aus, dass sich über die Länge der Kontaktrohre ein charakteristisches Temperaturprofil mit einer ausgeprägten Temperaturspitze, die auch als Hot-Spot bezeichnet wird, ausbildet. Bei unveränderten Reaktionsbedingungen ist die Lage dieses Hot-Spots entlang der Längsachse der Kontaktrohre unverändert, so dass die Kontaktrohre in diesem Bereich einer langanhaltenden hohen thermischen Belastung ausgesetzt sind.

Der Erfindung liegt die Erkenntnis zugrunde, dass die bisher verwendeten Auslegungskriterien für Reaktoren davon ausgehen, dass die höchste thermische Belastung, der ein Kontaktrohr im Bereich des Hot-Spots ausgesetzt ist, längere Zeit auf ein und denselben Bereich des Kontaktrohres einwirkt. Die Erfindung schlägt demgegenüber vor, die thermische Belastung der Kontaktrohre dadurch zu verringern, dass man die Betriebsbedingungen des Reaktors so einstellt, dass sich der Hot-Spot während des Betriebs des Reaktors entlang der Kontaktrohr-Längsachse in Strömungsrichtung der Reaktionsgase im Kontaktrohr kontinuierlich bewegt. Da das Temperaturprofil in Längsrichtung der Kontaktrohre vor und nach dem Hot-Spot (in Strömungsrichtung der Reaktionsgase betrachtet) rasch abfällt, wird ein gegebener Bereich des Kontaktrohres, im welchem sich der Hot-Spot momentan befindet, nur kurzfristig den höchsten Temperaturen ausgesetzt, so dass sich die thermische Belastung dieser Bereiche insgesamt verringert. Im Ergebnis kann daher die Kapazität des Reaktors erhöht werden, da die Wandtemperaturen kurzfristig höher sein können, als sie nach bisherigen Auslegungskriterien sein dürften, ohne dadurch die Korrosionsgefahr nennenswert zu erhöhen.

In dem erfindungsgemäßen Verfahren kann sich der Hot-Spot, beispielsweise in einer periodischen Bewegung, von einem Bereich am Einlassende eines Kontaktrohrs in Richtung Auslassende und wieder zurück Richtung Einlassende bewegen. Vorzugsweise findet jedoch keine Richtungsumkehr der Hot-Spot-Bewegung statt, so dass sich der Hot-Spot in einer bevorzugten Ausführungsform des erfindungsgemäßen Verfahrens von einem Bereich in der Nähe des Einlassendes eines Kontaktrohrs in Richtung Auslassende bewegt.

Vorzugsweise ist in dem erfindungsgemäßen Verfahren vorgesehen, dass sich der Hot-Spot kontinuierlich bewegt, wobei hier die kontinuierliche Bewegung oder Verschiebung des Hot-Spots im Rahmen der typischen Betriebsdauern eines industriellen Phosgenreaktors zu verstehen, die typischerweise im Bereich von vielen Wochen und Monaten liegen. Auf dieser Zeitskala sind beispielsweise Bewegungen des Hot-Spots, die im Rahmen der Messgenauigkeit nur über einen Zeitraum von mehreren Tagen nachweisbar ist, noch als kontinuierlich anzusehen ist. Ebenso fällt beispielsweise ein periodisches Bewegungsprofil des Hot-Spots im Kontaktrohr, das mit regelmäßigen Umkehrungen der Bewegungsrichtung verbunden ist, unter eine kontinuierliche Bewegung im Rahmen der vorliegenden Erfindung zu verstehen, auch wenn an den Umkehrpunkten der Bewegung die Wanderungsgeschwindigkeit kurzzeitig Null ist.

Gemäß einer vorteilhaften Ausführungsform der Erfindung wird die Gasphasenreaktion derart durchgeführt, dass die Wanderung der Hot-Spots eine Wanderungsgeschwindigkeit in Längsrichtung der Kontaktrohre aufweist, die im Bereich von 1 bis 50 mm pro Tag liegt. Bevorzugt liegt die Wanderungsgeschwindigkeit des Hot-Spots im Bereich von 2 bis 25 mm pro Tag.

Die Wanderungsgeschwindigkeit des Hot-Spots kann beispielsweise dadurch gemessen werden, dass man zwei oder mehr Temperaturmessstellen entlang der Rohrachse eines Kontaktrohres installiert. Aus der Laufzeit, die ein bestimmter Temperaturwert von einer zur nächsten Messposition benötigt, kann direkt auf die Wanderungsgeschwindigkeit des Hot-Spots geschlossen werden, da nicht nur der Hot-Spot sondern im Wesentlichen das gesamte Temperaturprofil über die Rohrachse wandert. Da sich das Temperaturprofil selbst nicht wesentlich ändert, braucht nicht direkt im Hot-Spot gemessen werden, sondern die Wanderungsgeschwindigkeit des Hot-Spots ergibt sich in entsprechender Weise durch Messung der Wanderung eines bestimmten Temperaturpunktes außerhalb des Hot-Spots. Tatsächlich kann die Messgenauigkeit sogar vergrößert werden, wenn nicht direkt im Hot-Spot sondern in einer steiler abfallenden Flanke vor oder nach dem Hot-Spot gemessen wird, da hier die durch die Bewegung des Hot-Spots bzw. des gesamten Temperaturprofils verursachten Temperaturänderungen am größten sind.

Die Bewegung des Hot-Spots mit einer vorgegebenen Wanderungsgeschwindigkeit entlang der Längsachse des Kontaktrohrs erfolgt erfindungsgemäß in einer kontrollieren Art und Weise. Dabei ist der Begriff "kontrolliert" nicht nur im engeren regelungstechnischen Sinne einer aktiven Kontrolle zu verstehen, bei der die Wanderungsgeschwindigkeit des Hotspots als Regelgröße gemessen und über geeignete Stellgrößen so beeinflusst wird, dass sie den gewünschten vorgegebenen Sollwert annimmt. Im Rahmen der vorliegenden Erfindung umfasst der Begriff "kontrolliert" auch eine passive Kontrolle, bei der, beispielsweise anhand vor Vorversuchen und/oder geeigneten Reaktormodellen, der Einfluss unterschiedlicher Betriebsparameter und Katalysatormaterialien auf die Wanderungsgeschwindigkeit des Hot-Spots untersucht wird und Betriebsparameter und Katalysator so gewählt werden, dass die gewünschte, also vorgegebene, Wanderungsgeschwindigkeit im realen Betrieb erzielt werden kann. Auf eine tatsächliche Messung der Wanderungsgeschwindigkeit kann in diesen Fällen verzichtet werden.

In diesem Sinne kann eine kontrollierte Wanderungsbewegung des Hot-Spots in den Kontaktrohren kann auf unterschiedliche Weise erzielt werden.

Es ist beispielsweise bekannt, dass die konkreten Betriebsbedingungen einen Einfluss auf die sich nach Anfahren des Reaktors einstellende Position des Hot-Spots entlang der Längsachse der Kontaktrohre haben. Gemäß einer Variante des erfindungsgemäßen Verfahrens kann man daher eine kontinuierliche Bewegung des Hot-Spots durch kontrollierte Veränderung der Betriebsbedingungen bewirken. Es ist beispielsweise bekannt, dass Phosgenlast, CO-Überschuss, Druck, Kühlmitteltemperatur, Kühlmitteldurchfluss, Teilrückführung von überschüssigem CO (CO-Recycle) einen Einfluss auf die sich nach Anfahren des Reaktors einstellende Position des Hot-Spots entlang der Längsachse der Kontaktrohre haben. Im Rahmen des erfindungsgemäßen Verfahrens kann daher durch kontrollierte Veränderung der Betriebsbedingungen eine kontrollierte Wanderungsbewegung des Hot-Spots erzielt werden. So kann man ausnutzen, dass Maßnahmen, welche die Reaktionsgeschwindigkeit erhöhen, die Lage des Hot-Spots zum einlassseitigen Ende der Kontaktrohre hin verschieben, also beispielsweise höherer CO-Überschuss, höherer Druck, höhere Kühlmitteltemperatur oder geringerer Kühlmittelfluss.

Die Erhöhung des CO-Überschusses kann vorzugsweise durch eine Teilrückführung des Produktgasgemisches in den Feedstrom bewirkt werden. Durch diese Maßnahme können nicht nur die Betriebsbedingungen im Hinblick auf die Wanderungsgeschwindigkeit des Hot-Spots beeinflusst, sondern auch der spezifische Kohlenmonoxidverbrauch gesenkt werden. Dazu wird aus dem Produktgasgemisch das Wertprodukt Phosgen, beispielsweise durch Kondensation als flüssiges Phosgen, abgetrennt. Aus dem verbleibenden Gasstrom wird dann ein Teilstrom abgetrennt, der als Recyclestrom in den Feedstrom vor dem Phosgenreaktor zurückgeführt wird. Der Recyclestrom weist häufig noch eine Kohlenmonoxidkonzentration im Bereich von 20 bis 60 Gew.-% bezogen auf das Gesamtgewicht des Recyclestromes auf.

Da je nach den konkreten Veränderungen der Betriebsbedingungen die Lage des Hot-Spots Richtung Einlass Ende oder Richtung Auslassende eines Kontaktrohres verschoben werden kann, lassen sich über die kontrollierte Beeinflussung der Betriebsbedingungen auch periodische Bewegungen des Hot-Spots in einem Kontaktrohr realisieren.

Alternativ oder zusätzlich zu einer Veränderung der Betriebsbedingungen kann eine kontrollierte Bewegung des Hot-Spots auch dadurch erzielt werden, dass man eine kontinuierliche Bewegung des Hot-Spots durch kontrollierte Deaktivierung des Katalysators in den Kontaktrohren bewirkt.

Mit zunehmender Deaktivierung des Katalysators geht eine Verschiebung des Temperaturprofils in Richtung auslassseitigem Ende der Kontaktrohre einher, da im einlassseitigen Bereich der Kontaktrohre aufgrund des bereits teilweise deaktivierten Katalysatormaterials ein geringerer Umsatz der Edukte stattfindet, so dass weiter stromabwärts noch mehr Edukte zur Umsetzung vorhanden sind, als vor der teilweisen Deaktivierung des Katalysatormaterials. Über eine kontrollierte allmähliche Deaktivierung des Katalysatormaterials kann folglich nur eine Bewegung des Hot-Spots bzw. eine Verschiebung des Temperaturprofils in Richtung Auslassende der Kontaktrohre erzeugt werden.

Erfindungsgemäß wird die Deaktivierung des Katalysatormaterials dann so gesteuert, dass die gewünschte Wanderungsgeschwindigkeit des Hot-Spots erzielt wird.

Gemäß einer Variante des erfindungsgemäßen Verfahrens kann man einen Katalysator verwenden, der unter den Betriebsbedingungen einer kontinuierlichen Deaktivierung unterliegt, beispielsweise einen Katalysator unter den thermischen Bedingungen der katalytischen Gasphasenreaktion eine kontinuierliche Deaktivierung zeigt. Zur Einstellung der gewünschten Wanderungsgeschwindigkeit können die Betriebsbedingungen entsprechend der gewünschten Deaktivierungsrate angepasst werden, soweit dies ohne Beeinträchtigung des Durchsatzes möglich ist. Zusätzlich oder alternativ ist auch eine chemische Modifikation des Katalysators denkbar, um durch eine daraus resultierende kontrollierte Deaktivierung die gewünschte Wanderungsgeschwindigkeit des Hot-Spots zu erzeugen. Beispielsweise kann der Katalysator mit Inertmaterial verdünnt, thermisch behandelt oder chemisch modifiziert werden.

Eine kontrollierte Deaktivierung des Katalysators kann auch dadurch erzielt werden, dass man den Katalysator durch Reaktion mit Komponenten aus dem die Kontaktrohre durchströmendem Gasgemisch kontrolliert chemisch deaktiviert. Dazu führt man die katalytische Gasphasenreaktion so durch, dass sich der Katalysator im Laufe der Zeit durch Reaktion mit Komponenten aus dem Gasgemisch in eine katalytisch inaktive oder zumindest weniger aktive Spezies umgewandelt. Bei den Reaktanten zur Deaktivierung des Katalysators kann es sich um Edukte der katalytischen Gasphasenreaktion handeln, also im Fall der Phosgenherstellung um Kohlenmonoxid oder Chlor. Es können aber auch Produkte oder Nebenprodukte der katalytischen Gasphasenreaktion zur gezielten Deaktivierung des Katalysators verwendet werden. Um die Verringerung der Ausbeute zu reduzieren werden bevorzugt Nebenprodukte zur Deaktivierung des Katalysators verwendet, wobei die Reaktionsbedingungen dann so angepasst werden können, dass Nebenprodukte in der für die Deaktivierung und damit für die Wanderungsgeschwindigkeit des Hot-Spots gewünschten Menge entstehen. Außerdem können dem Gasstrom zusätzliche Komponenten zugeführt werden, die nicht an der katalytischen Gasphasenreaktion beteiligt sind, sondern die spezifisch auf eine kontinuierliche Deaktivierung des Katalysators abzielen. Im letzteren Fall ergibt sich der Vorteil, dass man die eigentliche katalytische Gasphasenreaktion und die gezielte Deaktivierung des Katalysators unabhängig voneinander optimieren kann, d.h. die Wanderungsgeschwindigkeit des Hot-Spots kann ohne nachteilige Rückkopplung auf die Phosgenbildung optimiert werden. Geeignete Komponenten, die dem Gasstrom zugeführt werden können, sind beispielsweise Sauerstoff, Chloroxide und Gemische davon. Anstelle einer aktiven Zuführung derartiger deaktivierender Komponenten kann man ihre gewünschte Konzentration im Gasstrom auch dadurch erreichen, dass man die den Gasstrom bildenden Einsatzströme in vorgelagerten Prozessschritten nicht in vollem Maße aufreinigt. Beispielsweise kann ein aus einer Chloralkali-Elektrolyse stammender Chlorgasstrom zunächst noch Verunreinigungen wie Sauerstoff und Chloroxide enthalten, die üblicherweise vor einer Weiterverwendung des Chlorgases in einem Chlorreinigungsschritt aus dem Gasstrom entfernt werden. Im Rahmen des erfindungsgemäßen Verfahrens kann man die Chlorreinigung so anpassen, dass eine zur gezielten Deaktivierung des Katalysators erforderliche Konzentration an Verunreinigungen in dem Chlorgasstrom erhalten bleibt. Weitere geeignete Komponenten, die dem Feedstrom zugeführt werden können, um den Katalysator kontinuierlich zu deaktivieren, sind beispielsweise Metallchloride, beispielsweise Eisen-, Nickel- oder Molybdänchloride. Diese können dem Feedstrom aktiv zugegeben werden. Man kann das Chlorgas des Feedstroms jedoch auch gezielt durch metallische Leitungen führen, in denen ein kleiner Teil des Chlorgases Metallchloridverbindungen mit Komponenten der Innenwände der Leitungen bildet, die dann mit dem Chlorgasstrom in den Phosgenreaktor eingetragen werden.

In dem erfindungsgemäßen Verfahren können unterschiedliche Katalysatoren eingesetzt werden. Vorzugsweise verwendet man bei der industriellen Herstellung von Phosgen durch katalytische Gasphasenreaktion allerdings eine Aktivkohle als Katalysator. In diesem Fall kann eine Deaktivierung des Katalysators Aktivkohle beispielsweise dadurch erzielt werden, dass man Reaktionsbedingungen wählt, die zu einer vermehrten Reaktion von Kohlenstoff und Chlor, beispielsweise unter Bildung von Tetrachlorkohlenstoff, führen, so dass Katalysatormaterial im Laufe der Betriebszeit kontinuierlich in Form von Tetrachlorkohlenstoff ausgetragen wird, was einer teilweisen Deaktivierung der Gesamtmenge des ursprünglich eingesetzten Katalysatormaterials gleichkommt. Eine Deaktivierung von Aktivkohle als Katalysator kann beispielsweise auch dadurch realisiert werden, dass man einen Feedstrom verwendet, der eine deaktivierende Komponente, wie beispielsweise Sauerstoff oder Chloroxide enthält. Beispielsweise kann man einen Chlor-Einsatzstrom verwenden, bei dem der Sauerstoffgehalt größer als 10 ppm, vorzugsweise größer als 20 ppm beträgt, um eine kontinuierliche Deaktivierung des Katalysators durch Abbrand der Aktivkohle unter Bildung von Kohlenmonoxid/Kohlendioxid zu ermöglichen.

Die Betriebsbedingungen bzw. die Deaktivierung des Katalysators sind dabei so zu wählen, dass der integrale Materialabtrag der Wände der Kontaktrohre maximal 0,1 mm pro Jahr, bevorzugt maximal 0,05 mm pro Jahr und besonders bevorzugt maximal 0,02 mm pro Jahr beträgt.

Der integrale Materialabtrag $s$ bis zum Zeitpunkt $t$ nach Betriebsbeginn am Ort $x$ entlang der Längsachse eines Kontaktrohres ergibt sich dabei als Funktion einer vom Katalysatormaterial und der Temperatur $T$ abhängigen Korrosionsrate $K_R$ als:

$$s_x = \int_{t=0}^{t} K_R(T_{x,t})dt$$

Bei bekannter Korrosionsrate $K_R$, die für zahlreiche im Reaktorbau verwendete Materialien in Literaturquellen, wie dem oben erwähnten "*Materials Selector for Hazardous Chemical*", dokumentiert ist, und bei bekannter zeitlicher Entwicklung des Temperaturprofils $T_{x,t}$ im Kontaktrohr lässt sich also der integrale Materialabtrag $s$ ermitteln.

Vorzugsweise weist der Feedstrom im erfindungsgemäßen Verfahren einen stöchiometrischen Überschuss von Kohlenmonoxid zu Chlor von 0,1 bis 50 Mol-% aufweist, so dass eine nahezu vollständige Umsetzung von Chlor gewährleistet ist. Muss mit schwankender Chlorkonzentration im Chloreinsatzsstrom gerechnet werden, so wird man eher einen höheren Kohlenmonoxidüberschuss wählen, generell wird man aber den Überschuss aus Kostengründen so niedrig wie möglich wählen, solange die vollständige Chlorumsetzung noch gewährleistet ist.

Der Feedstrom wird vorzugsweise mit einem absoluten Druck im Bereich von 0,5 bis 20 bar zugeführt wird. Besonders bevorzugt wird der Feedstrom mit einem Überdruck zugeführt, beispielsweise bei einem absoluten Druck von 3 bis 7 bar (absolut). Je höher der Druck des entstehenden Reaktionsgemisches am Ausgang des Reaktors ist, bei desto höheren Temperaturen kann das im Reaktionsgemisch enthaltene Phosgen kondensiert werden. Vorzugsweise ist der Druck des Reaktionsgemisches am Ausgang des Reaktors noch so hoch, dass das Phosgen zumindest teilweise mit Kühlwasser kondensiert werden kann.

Gemäß einer speziellen Ausführungsform der Erfindung ist der Reaktor in Längsrichtung der Kontaktrohre in mindestens zwei Kühlzonen unterteilt, die beispielsweise durch Zwischenböden voneinander getrennt sind. In den verschiedenen Kühlzonen können unterschiedliche Wärmeträger eingesetzt werden, deren Auswahl an die thermischen Bedingungen in den jeweiligen Kühlzonen angepasst werden kann. Da aber eine vollständige Abdichtung der Kontaktrohrdurchführungen in den Zwischenböden technisch aufwändig ist, so dass in der Praxis üblicherweise mit Undichtigkeiten gerechnet werden muss, wird in den verschiedenen Kühlzonen vorzugsweise derselbe Wärmeträger verwendet. In diesem Fall kann dann beispielsweise in einer Kühlzone mit besonders hoher Wärmeentwicklung Siedekühlung durchgeführt werden, während in einer anderen Kühlzone Flüssigkeitskühlung durchgeführt wird. Bei Siedekühlung wird man vorzugsweise keine Umlenkbleche oder speziell ausgelegte Umlenkbleche vorsehen, bei denen ein Rückstau von aufsteigenden Gasblasen verhindert wird. Wenn der Reaktor mehrere Kühlzonen aufweist wird auch die Einstellung von kontrollierten Betriebsbedingungen für eine definierte Wanderungsgeschwindigkeit des Hot-Spots erleichtert.

Als fluider Wärmeträger können unterschiedliche Stoffe und Stoffgemische verwendet werden, die beispielsweise aufgrund ihrer Wärmekapazität oder aufgrund der ihrer Verdampfungsenthalpie geeignet sind, die Reaktionswäre abzuführen. Typischerweise verwendet man einen flüssigen Wärmeträger, wie beispielsweise Wasser, Dibenzyltoluol (Marlotherm) oder Monochlorbenzol.

Das erfindungsgemäße Verfahren kann, insbesondere wenn die Wanderungsgeschwindigkeit des Hot-Spots durch kontrollierte Deaktivierung des Katalysators hervorgerufen wird, in einem herkömmlichen Reaktor zur Herstellung von Phosgen durch katalytische Gasphasenreaktion von Kohlenmonoxid und Chlor durchgeführt werden. Die zur Einstellung der Wanderungsgeschwindigkeit erforderlichen Betriebsbedingungen und Katalysatoreigenschaften, insbesondere die Korrosionsrate des Katalysators, lassen sich anhand von Vorversuchen ermitteln und im Reaktor entsprechend einstellen. Vorzugsweise weist der Reaktor jedoch auch in diesem Fall eine Kontrolleinrichtung zur Überwachung der Wanderungsgeschwindigkeit des Hot-Spots auf. Die Kontrolleinrichtung umfasst dabei wenigstens eine Temperaturmeßsonde zur Bestimmung der Temperatur in wenigstens einem Kontaktrohr an wenigstens zwei entlang der Längsachse des Kontaktrohrs beabstandeten Messstellen. Die Kontrolleinrichtung umfasst dann auch eine Auswerteeinheit, die aus den Temperarturmessung die Wanderungsgeschwindigkeit des Hot-Spots ermittelt. So kann die Wanderungsgeschwindigkeit $W$ aus der Laufzeit $\Delta t$, die ein bestimmter Temperaturwert von einer zur nächsten Messstelle benötigt, und dem Abstand $\Delta x$ der Messstellen entlang der Längsachse eines Kontaktrohres direkt auf die Wanderungsgeschwindigkeit geschlossen werden gemäß der Formel:

$$W = \Delta x / \Delta t$$

Gemäß einer weiteren Ausführungsform der Erfindung basiert die Kontrolle der Wanderungsgeschwindigkeit des Hot-Spots entlang der Längsachse der Kontaktrohre nicht auf einer tatsächlichen Temperaturmessung in wenigstens einem Kontaktrohr. Es ist nämlich auch möglich, das momentane Temperaturprofil in den Kontaktrohren und dessen Veränderungen und damit auch die Wanderungsgeschwindigkeit des Hot-Spots anhand eines Reaktormodells zu berechnen. In das Reaktormodel fließen die aktuellen Betriebsbedingungen und der Einfluss von deren Änderungen auf die Lage des Hot-Spots ein. Anhand von experimentelle Voruntersuchungen kann insbesondere ein kinetisches Modell für die Veränderung des Katalysators durch die Betriebsbedingungen, einschließlich der Berücksichtigung eventueller Verunreinigungen des Feedstroms, erstellt werden. Ein im Rahmen der vorliegenden Erfindung verwendbares Reaktormodel wird beispielsweise von Michell et al. in "Selections of carbon catalyst for the industrial manufacture of phosgene", Catal. Sci. Technol., 2012, 2, 2109-2115, für einen Reaktor mit Aktivkohle-Katalysator beschrieben. In das dort beschriebene Reaktormodel fließt zusätzlich ein kinetisches Model für die Reaktion des Kohlenstoffkatalysators mit Chlorgas und eventuell Sauerstoffanteilen im Feedstrom ein. Aus dem beschriebene Modell kann abgeleitet werden, dass beispielsweise eine genaue Messung des Choranteils im Produktgasstrom herangezogen werden kann, um im Rahmen der vorliegenden Erfindung das Temperaturprofil in den Kontaktrohren zu ermitteln und die Hot-Spot-Wanderungsgeschwindigkeit zu regulieren.

Die Erfindung betrifft auch einen Reaktor zur Herstellung von Phosgen durch Gasphasenreaktion von Kohlenmonoxid und Chlor in Gegenwart eines Katalysators, insbesondere in Gegenwart eines Aktivkohlekatalysators, der eine Vielzahl von parallel zueinander angeordneten Kontaktrohren mit Einlassenden und Auslassenden umfasst, die mit dem Katalysator gefüllt sind und an ihren Einlassenden und Auslassenden in jeweils einem Rohrboden eingeschweißt sind, mit Zuführung der Edukte am oberen Ende der Kontaktrohre und Ableitung des gasförmigen Reaktionsgemisches am unteren Ende der Kontaktrohre, jeweils über eine Haube, sowie mit Zu- bzw. Abführeinrichtungen für einen flüssigen Wärmeträger in Mantelform zwischen den Kontaktrohren, wobei der erfindungsgemäße Reaktor dadurch gekennzeichnet ist, dass der Reaktor eine Kontrolleinrichtung zur Überwachung der Wanderungsgeschwindigkeit der Position der höchsten Temperatur in den Kontaktrohren (Hot-Spot) aufweist.

Gemäß einer bevorzugten Ausführungsform weist die Kontrolleinrichtung wenigstens eine Temperaturmesssonde zur Bestimmung der Temperatur in wenigstens einem Kontaktrohr an wenigstens zwei entlang der Längsachse des Kontaktrohrs voneinander beabstandeten Messstellen und eine Auswerteeinheit auf. Die Temperaturmesssonde kann beispielsweise als Multithermoelement ausgeführt, wobei entlang der Längsachse der Temperaturmesssonde zahlreiche Messelemente zur Temperaturerfassung angeordnet sind.

Wie oben bereits erläutert, ist es zur Ermittlung der Wanderungsgeschwindigkeit des Hot-Spots nicht erforderlich, die Temperatur an der Position der höchsten Temperatur, also am Hot-Spots selbst, zu messen, sondern die Temperatur kann an einer beliebigen Stelle des Temperaturprofils gemessen werden, vorzugsweise an einer Stelle mit hohem Temperaturgradienten, also an einer Stelle an der sich die Temperatur entlang der Längsachse des Kontaktrohres stark ändert.

Die Auswerteeinheit zur Ermittlung der Wanderungsgeschwindigkeit des Hot-Spots umfasst vorzugsweise einen Mikroprozessor, der auch Mittel zur Zeitmessung umfasst, um die Wanderungsgeschwindigkeit W aus Temperatur-Laufzeiten nach obiger Formel zu berechnen.

Vorzugsweise weist die Kontrolleinrichtung zur Überwachung der Wanderungsgeschwindigkeit des Hot-Spots auch Steuerungsmittel zur Veränderung der Betriebsbedingungen des Reaktors auf, um die Wanderungsgeschwindigkeit auf einen gewünschten Wert einzustellen oder die Wanderungsgeschwindigkeit im Betrieb zu verändern. Wenn beispielsweise gemäß einer Variante des erfindungsgemäßen Verfahrens die Wanderung des Hot-Spots über eine aktive oder passive Deaktivierung des Katalysators erzielt wird, kann man mit fortschreitender Betriebsdauer die Wanderungsgeschwindigkeit auch reduzieren, da sich bereits aufgrund der zunehmenden Deaktivierung des Katalysators die thermische Belastung der Kontaktrohrwände verringert.

In einem Regelkreis entsprechen die Steuerungsmittel zur Veränderung der Betriebsbedingungen den Stellmitteln, mit denen die Wanderungsgeschwindigkeit des Hot-Spots als Regelgröße beeinflusst werden kann. Die Stellmittel können auf unterschiedlichste Stellgrößen, wie Kühlmittelstrom, Kühlmitteltemperatur, Flächenlast, Konzentrationsverhältnisse im Feedstrom, usw. einwirken. Üblicherweise wird der Regelbereich so begrenzt, dass eine Verringerung der Phosgenausbeute vermieden wird.

Im Fall einer aktiven Deaktivierung des Katalysators durch Zugabe von spezifischen deaktivierenden Komponenten zu dem Feedstrom, können die Stellmittel auch auf die Konzentration bzw. den Volumenstrom der entsprechenden Deaktivierungskomponenten wirken. Beispielsweise können die Steuerungsmittel auf die Zugabe von Sauerstoff oder Chloroxiden zum Feedstrom einwirken.

Die Kontaktrohre des erfindungsgemäßen Reaktors können eine Länge L im Bereich von 1,5 bis 12 m, vorzugsweise von 2,5 bis 8 m aufweisen. Besonders bevorzugt sind Reaktorrohrlängen im Bereich von 6 bis 6,5 m. Üblicherweise sind jeweils ca. 25 cm am Anfang und am Ende eines Kontaktrohrs frei von Katalysator, da in diesen Bereich die Wärmeabfuhr aufgrund der Einbausituation der Rohre unzureichend ist.

Im Reaktor ist ein Bündel, das heißt eine Vielzahl von Kontaktrohren, parallel zueinander in Reaktorlängsrichtung angeordnet.

Die Kontaktrohre sind aus einem korrosionsfesten Material, beispielsweise Edelstahl, bevorzugt Duplexstahl 1.4462, Edelstahl 1.4571 oder Edelstahl 1.4541 oder auch aus Nickel-Basislegierungen oder aus Nickel gebildet. Bevorzugt sind auch die Rohrböden oder auch der gesamte Reaktor aus den vorerwähnten Werkstoffen, insbesondere aus Duplex oder Edelstahl gebildet. Reaktormantel und Reaktorböden können jedoch auch aus kostengünstigeren Metallen und Metalllegierungen, beispielsweise aus Schwarzstahl gefertigt werden. Komponenten, die mit Reaktanten in Kontakt kommen, können dann mit einer Schutzschicht aus höherwertigen Materialien plattiert werden.

Jedes Kontaktrohr weist bevorzugt eine Wandstärke im Bereich von 2,0 bis 4,0 mm, insbesondere von 2,5 bis 3,0 mm, und einen Rohrinnendurchmesser im Bereich von bis zu 100 mm, typischerweise zwischen 35 und 70 mm und bevorzugt zwischen 39 und 45 mm, auf.

Die Kontaktrohre sind an beiden Enden in Rohrböden fluiddicht befestigt, bevorzugt verschweißt. Die Rohrböden bestehen ebenfalls aus einem korrosionsfesten Material, bevorzugt Edelstahl, insbesondere Duplexstahl, besonders bevorzugt aus demselben Material wie die Kontaktrohre. Die Abdichtung zu den Rohrböden erfolgt vorzugsweise durch Verschweißen. Beispielsweise können pro Rohr mindestens zwei Lagen Schweißnähte vorgesehen, die winkelversetzt, beispielsweise um 180° versetzt, hergestellt werden, so dass Anfang und Ende der jeweiligen Lagen nicht aufeinanderliegen.

Beide Reaktorenden sind nach außen durch Hauben begrenzt. Durch eine Haube erfolgt die Zuführung des Reaktionsgemisches zu den Kontaktrohren, durch die Haube am anderen Ende des Reaktors wird der Produktstrom abgezogen.

In der Haube, in der das Reaktionsgemisch zugeführt wird, ist bevorzugt ein Gasverteiler zur Vergleichmäßigung des Gasstromes angeordnet, beispielsweise in Form einer Platte, insbesondere einer perforierten Platte.

Vorzugsweise sind im Zwischenraum zwischen den Kontaktrohren senkrecht zur Reaktorlängsrichtung Umlenkbleche angeordnet. Die Umlenkbleche sind können beispielsweise dergestalt ausgebildet sein, dass aufeinanderfolgende Umlenkbleche einander gegenüberliegende kreissegmentförmige Aussparungen zur Innenwand des Reaktors hinaufweist, um einen mäanderförmigen Verlauf des fluiden Wärmeträgers zu gewährleisten. In einer anderen Ausführungsform können das Rohrbündel auch in zwei Bündel aufgeteilt werden, wobei dann jeweils ein Umlenkblech zwei einander gegenüberliegende kreissegmentförmige Aussparungen aufweist, und das jeweils unmittelbar darauffolgende Umlenkblech eine Durchtrittsöffnung in einem zentralen Bereich des Reaktors aufweist. Die Umlenkbleche bewirken eine Umlenkung des im Reaktorinnenraum, im Zwischenraum zwischen den Kontaktrohren zirkulierenden Wärmeträgers, dergestalt, dass die Kontaktrohre vom Wärmeträger quer angeströmt werden, wodurch die Wärmeabführung verbessert wird. Die Anzahl der Umlenkbleche beträgt bevorzugt etwa 6 bis 35. Vorzugsweise sind die Umlenkbleche äquidistant zu einander angeordnet, besonders bevorzugt ist jedoch das unterste und das oberste Umlenkblech jeweils vom Rohrboden weiter entfernt als der Abstand zweier aufeinander folgender Umlenkbleche zueinander, bevorzugt um etwa das 1,5-fache. Im Bereich der Durchtrittsöffnungen ist der Reaktor unberohrt, das heißt er ist im Wesentlichen frei von Kontaktrohren. In einer Ausführungsform können dabei einzelne Kontaktrohre in den Durchtrittsöffnungen der Umlenkbereiche angeordnet sein. In einer weiteren Ausführungsform sind die Durchtrittsöffnungen vollständig frei von Kontaktrohren. Bevorzugt lassen alle Umlenkbleche jeweils gleiche Durchtrittsöffnungen frei. Die Fläche jeder Durchtrittsöffnung beträgt bevorzugt 5 bis 20 %, insbesondere 8 bis 14 % des Reaktorquerschnitts.

Bevorzugt sind die Umlenkbleche nicht dichtend um die Kontaktrohre angeordnet, und lassen eine Leckageströmung von bis zu 40 Vol.-% des Gesamtstroms des Wärmeträgers zu. Hierzu sind zwischen den Kontaktrohren und Umlenkblechen Spalte im Bereich von 0,1 bis 0,6 mm, bevorzugt von 0,2 bis 0,4 mm vorgesehen. Es ist vorteilhaft, die Umlenkbleche mit Ausnahme der Bereiche der Durchtrittsöffnungen zur Reaktorinnenwand hin flüssigkeitsdicht zu gestalten, so dass dort kein zusätzlicher Leckagestrom auftritt.

Die Umlenkbleche können aus einem korrosionsfesten Material, bevorzugt Edelstahl, insbesondere Duplexstahl, bevorzugt in einer Dicke von 8 bis 30 mm, bevorzugt von 10 bis 20 mm, gebildet werden. Da Umlenkbleche aber nicht mit Reaktionsteilnehmern in Kontakt kommen und die Kontaktrohre üblicherweise mit etwas Spiel durch die Öffnungen der Umlenkbleche geführt werden, können die Umlenkbleche auch aus kostengünstigeren Materialen wie Schwarzstahl gefertigt werden.

Gemäß einer bevorzugten Ausführungsform ist der Mantelraum des erfindungsgemäßen Reaktors in wenigstens zwei durch Zwischenböden getrennte Kühlzonen unterteilt. Die Zwischenböden sind vorzugsweise aus höherwertigem Material gefertigt, da die Öffnungen im Zwischenboden, durch welche die Kontaktrohre geführt werden, durch Anwalzen möglichst dicht mit dem Außenmantel der Kontaktrohre abschließen sollen.

Die Kontaktrohre sind mit einem Feststoffkatalysator, bevorzugt Aktivkohle, gefüllt. Die Katalysatorschüttung in den Kontaktrohren weist bevorzugt ein Lückenvolumen von 0,33 bis 0,6, insbesondere von 0,33 bis 0,45, auf. Das Lückenvolumen bezieht sich auf die Katalysatorschüttung, bei der der Feststoffkatalysator als Vollkörper angenommen wird. Die Porosität der Katalysatorkörper selbst, die beispielsweise 50% betragen kann, wird nicht berücksichtigt.

Die Erfindung wird im Folgenden anhand schematischer Zeichnungen sowie anhand eines Ausführungsbeispiels näher erläutert:

In den Zeichnungen zeigen

Figur 1    eine schematische Darstellung eines zur Durchführung des erfindungsgemäßen Verfahrens geeigneten Reaktors;

Figur 2    eine Detailansicht des in Figur 1 mit II bezeichneten Bereichs des Reaktors;

Figur 3    ein Temperaturprofil über den Querschnitt eines Kontaktrohres des Reaktors der Figur 1 entlang einer Linie III-III der Figur 2;

Figur 4    ein Temperaturprofil entlang der Längsachse eines Kontaktrohrs des Reaktors der Figur 1 zu unterschiedlichen Zeiten; und

Figur 5    ein am Ort x gemessenes Temperaturprofil in Abhängigkeit von der Zeit.

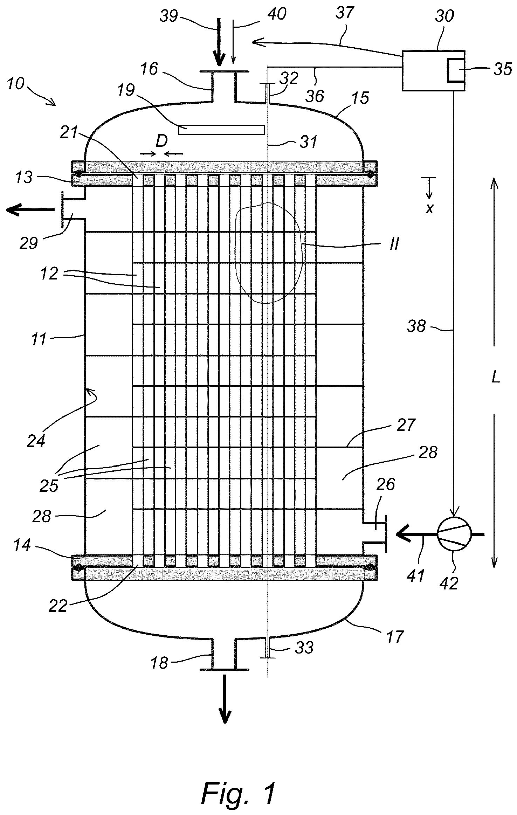

Figur 1 zeigt einen zur Durchführung des erfindungsgemäßen Verfahrens geeigneten Phosgenreaktor 10 mit einem im wesentlichen zylindrischen Reaktormantel 11. Der in Figur 1 im Längsschnitt dargestellte Reaktor 10 weist ein Bündel von Kontaktrohren 12 auf, die parallel zueinander in Längsrichtung des Reaktors 10 in oberen und unteren Rohrböden 13, 14 abdichtend befestigt sind. An beiden Enden des Reaktors sind eine obere Haube 15 mit einem Einlassstutzen 16 bzw. eine untere Haube 17 mit einem Auslassstutzen 18 vorgesehen. In der oberen Haube 15 ist ein Gasverteiler 19 zur Vergleichmäßigung und Verteilung der Gasströmungen über den Reaktorquerschnitt angeordnet. Die Kontaktrohre 12 münden über Einlassenden 21 in die obere Haube 15 bzw. über Auslassenden 22 in die untere Haube 17.

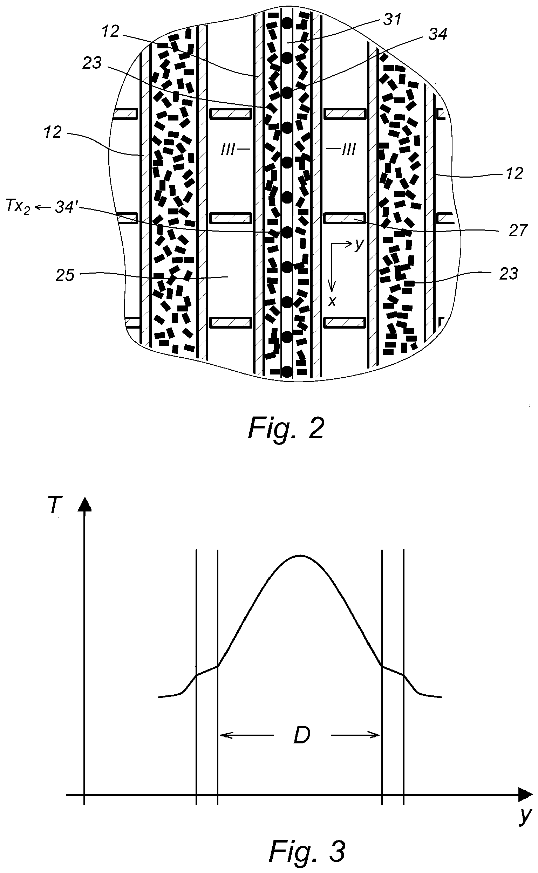

Das Eduktgasgemisch wird über den Einlassstutzen 16 eingeleitet und über den Gasverteiler 19 und auf die Einlassende 21 der Kontaktrohre 12 verteilt. Die Kontaktrohre 12 bestehen im dargestellten Beispiel aus Duplexstahl 1.4462 und weisen eine typische Länge L von ca. 6 m auf, die im Wesentlichen der Schüttungshöhe des in den Kontaktrohren befindlichen Katalysators entspricht. Die Kontaktrohre haben jeweils einen Innendurchmesser D von 39,3 mm und sind mit zylindrischen Aktivkohlekatalysatorteilchen 23 (vergl. Fig. 2) von 4 mm Durchmesser und 5 mm Länge befüllt. Nach Durchströmen der Kontaktrohre 12 strömt Reaktionsgemisch aus den Auslassenden 22 in die untere Haube 17 und wird über den Auslassstutzen 18 abgeleitet.

Zwischen den Kontaktrohren 12 selbst bzw. zwischen den Kontaktrohren 12 und einer Innenwand 24 des Reaktors ist ein Mantelraum 25 vorgesehen, der von einem flüssigen Wärmetauschmittel durchströmt werden kann. Dazu wird im Gegenstrom zur Gasströmung der Reaktionsgase am unteren Ende des Reaktors 10 über einen Eintrittsstutzen 26 ein fluider Wärmeträger (nicht dargestellt) eingeleitet. Der Wärmeträger wird mittels senkrecht zur Längsrichtung des Reaktors angeordneter Umlenkbleche 27, die jeweils alternierend Durchtrittsöffnungen 28 im Randbereich des Reaktors freilassen, in einer mäanderförmigen Strömung durch den Reaktor geleitet und tritt über einen Austrittsstutzen 29 wieder aus dem Mantelraum 25 des Reaktors 10 aus. In den Bereichen der Durchtrittsöffnungen 28 ist der Reaktor 10 unberohrt, da in diesen Bereichen durch den Übergang der Kühlmittelströmung von einer Quer- in eine Längsströmung nur eine unzureichende Kühlung der Kontaktrohre möglich wäre.

Im dargestellten Beispiel weist der Reaktor 10 eine Kühlzone auf. In alternativen Ausführungsformen kann der Reaktor aber auch mehrere, beispielsweise zwei, separate Kühlzonen aufweisen, die durch Zwischenböden voneinander getrennt sind. In diesem Fall können die Kühlzonen mit unterschiedlichen Wärmeträgern gekühlt werden. Vorzugsweise verwendet man aber den gleichen Wärmeträger benachbarten Kühlzonen, da die Öffnungen in den Zwischenböden für den Durchtritt der Kontaktrohre nur sehr schwer vollständig abgedichtet werden können. Auch bei Verwendung des gleichen Wärmeträgers können jedoch unterschiedliche Kühlschemata eingesetzt werden. Beispielsweise kann ein flüssiges Kühlmittel verwendet werden, das in der ersten Kühlzone mittels Siedekühlung Wärme abführt, während in der zweiten Kühlzone die Wärmeabfuhr durch reine Flüssigkeitskühlung erfolgt.

In Figur 1 ist außerdem schematisch eine Kontrolleinrichtung 30 zur Überwachung der Wanderungsgeschwindigkeit der Position des Hot-Spots dargestellt. Die Kontrolleinrichtung 30 umfasst wenigstens eine Temperaturmesssonde 31, die über einen oberen Stutzen 32 oder einen unteren Stutzen 33 in ein Kontaktrohr 12 eingeführt wird. Die Temperaturmesssonde kann auch geteilt ausgeführt sein, so dass eine Teilsonde von unten und eine Teilsonde von oben in das Kontaktrohr 12 eingeführt wird.

Figur 2 zeigt einen vergrößerten Ausschnitt eines Bereichs des Reaktorquerschnitts der Figur 1, der in Figur 1 mit II bezeichnet ist. Man erkennt Abschnitte von drei nebeneinanderliegenden Kontaktrohren 12, die von einem Mantelraum 25 umgeben sind, der von dem fluiden Wärmeträger durchströmt wird. In dem mittleren Kontaktrohr 12 befindet sich die Temperaturmesssonde 31. Dargestellt sind außer den Umlenkblechen 2, sowie, zur Orientierung, die Richtungspfeile, welche die Längsachse der Kontaktrohre 12 anzeigen (Richtungspfeil x) und eine Richtung im Querschnitt der Kontaktrohre, senkrecht zur Längsrichtung (Richtungspfeil y). Wie man insbesondere in der Detaildarstellung der Figur 2 erkennt, ist der Temperaturmesssonde 31 bevorzugt als Multithermoelement ausgeführt, wobei entlang der Längsachse der Temperaturmesssonde 31 zahlreiche Messelemente 34 angeordnet sind, um ein Temperaturprofil in dem Kontaktrohr zu ermitteln. Typischerweise liegen die Abstände der einzelnen Messelemente im Bereich von 50 - 100 mm, wobei insbesondere im Bereich des Hot-Spots eine dichtere Anordnung der Messelemente bevorzugt ist, um die Genauigkeit der Regelung der Wanderungsgeschwindigkeit des Hotspots zu erhöhen. Jedes Messelement 34 liefert einen Temperaturwert $Tx_i$ für einen Punkt x entlang der Längsachse des Kontaktrohrs, der dem Abstand des jeweiligen Messelementes vom Einlassende 21 des Kontaktrohrs 12 entspricht (in den Figuren 1 und 2 schematisch durch den Pfeil x angedeutet). In Figur 2 ist exemplarisch ein Temperaturwert $Tx_2$ einem Messelement 34' zugeordnet. Wenn im Folgenden von Temperaturwerten $Tx_1$, $Tx_2$, $Tx_3$, $Tx_4$ gesprochen wird, ist nicht zwingend gemeint, dass es sich hier um Temperaturwerte von unmittelbar aufeinanderfolgenden Messelementen 34 handelt, jedoch gilt, dass ein Temperaturwert $Tx_{i+1}$ von einem Messelement gemessen wird, das weiter vom Einlassende 21 entfernt ist, als ein Messelement, das den Temperaturwert $Tx_i$ misst.

Wie in Figur 1 schematisch durch die Datenleitung 36 angedeutet ist, übermittelt die Temperaturmesssonde 31 die Temperaturdaten $Tx_1$, $Tx_2$, $Tx_3$, $Tx_4$, ... an die Kontrolleinrichtung 30. Die Kontrolleinheit 30 weist eine Auswerteeinheit 35 auf, die aus den von der Temperaturmesssonde gelieferten Daten, dem bekannten Abstand der Messelemente 34 der Temperaturmesssonde vom Einlassende 21 und damit auch dem Abstand der Messelemente zueinander und einer internen oder externen Uhr der Auswerteeinheit 35 die Wanderungsgeschwindigkeit des Hot-Spots in dem Kontaktrohr 12 ermittelt. Wenn die ermittelte Wanderungsgeschwindigkeit von einer vorgegebenen Soll-Wanderungsgeschwindigkeit abweicht, kann die Auswerteeinheit 35 auf geeignete Stellgrößen einwirken, um die Wanderungsgeschwindigkeit des Hot-Spots gemäß der Vorgabe einzustellen.

In Figur 1 sind mit den Pfeilen 37 und 38 Einwirkungen auf unterschiedliche Stellgrößen schematisch dargestellt. Pfeil 37 soll symbolisieren, dass die Kontrolleinrichtung 30 auf die Eigenschaften des Feedstrom 39 (beispielsweise auf dessen Temperatur und Zusammensetzung) und/oder auf eine optionale Zugabe eines Zusatzfeedstroms 40, der Komponenten enthält, die den Katalysator zumindest teilweise deaktivieren, einwirken kann. Pfeil 38 symbolisiert, dass die Kontrolleinrichtung 30 auf die Eigenschaften des Kühlmittelstroms 41 einwirkt, beispielsweise auf dessen Temperatur und/oder, durch Steuerung einer Kühlmittelpumpe 42, auf dessen Volumenstrom.

Figur 3 zeigt ein Temperaturprofil entlang einer in Figur 2 dargestellten Durchmesserlinie III-III eines Querschnitts durch ein Kontaktrohr 12 senkrecht zur Längsachse des Kontaktrohrs. Man erkennt einen im Wesentlichen parabelförmigen Verlauf des Temperaturprofils im Inneren des Kontaktrohrs 12 mit Durchmesser D, wobei die höchste Temperatur im Zentrum des Kontaktrohrs erreicht wird. Die Temperatur fällt dann zu der gekühlten Rohrwand des Kontaktrohrs hin ab. Innerhalb der Rohrwand fällt die Temperatur im Wesentlichen linear auf die Temperatur der Wärmeträgergrenzschicht an der Außenwand des Kontaktrohrs 12 ab. Innerhalb der Kühlmittelgrenzschicht erfolgt ein weiterer im Wesentlichen linearer Temperaturabfall, der durch den äußeren Wärmeübergang verursacht wird, auf die Bulk-Temperatur des fluiden Wärmeträgers.

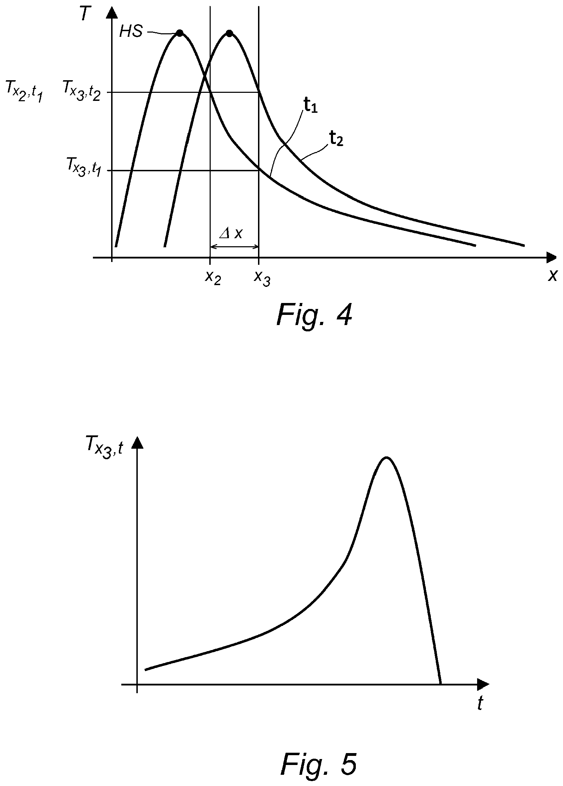

Figur 4 zeigt die Wanderung eines typischen Temperaturprofils eines Kontaktrohrs aus der industriellen Phosgensynthese, die beispielsweise durch gezielte Deaktivierung des Katalysators in dem Kontaktrohr erreicht wird. Gezeigt sind zwei Temperaturprofile $Tt_1$ und $Tt_2$, die zu unterschiedlichen Zeiten $t_1$ bzw. $t_2$ aufgezeichnet worden sind. Man erkennt, dass sich die Form des Temperaturprofils zu unterschiedlichen Zeiten nicht wesentlich verändert, sondern primär entlang der Längsachse x des Kontaktrohrs verschoben wird. Daher muss die Wanderungsgeschwindigkeit des Hot-Spots HS nicht notwendigerweise am Maximum des Temperaturprofils gemessen werden. Wenn dieselbe Temperatur T zu unterschiedlichen Zeiten an unterschiedlichen Messstellen gemessen wird, ergibt sich die Wanderungsgeschwindigkeit des Hot-Spots, wie oben bereits erläutert, über die Formel $W = \Delta x/\Delta t$, mit $\Delta x = x_3 - x_2$ und $\Delta t = t_2 - t_1$.

Figur 5 zeigt den zeitlichen Verlauf der Temperatur an einer einzelnen Messstelle (hier die Macmessstelle $x_3$ aus Figur 4). Aus dem zeitlichen Temperaturprofil kann bei bekannter Korrosionsrate $K_R(T)$ der integrale Materialabtrag an dieser Stelle bestimmt werden.

**Patentansprüche**

1. Verfahren zur Herstellung von Phosgen durch Gasphasenreaktion von Kohlenmonoxid und Chlor in Gegenwart eines Katalysators in einem Reaktor, der eine Vielzahl von parallel zueinander angeordneten Kontaktrohren umfasst, die mit dem Katalysator befüllt sind und die von wenigstens einem fluiden Wärmeträger umströmt werden, wobei man einen Feedstrom eines Gemisches eines Chlor-Einsatzstroms und eines Kohlenmonoxid-Einsatzstroms an ein Einlassende der Kontaktrohre in die Kontaktrohre leitet, in den Kontaktrohren zu einem Phosgen enthaltenden Produktgasgemisch reagieren lässt, und das Produktgasgemisch an einem Auslassende der Kontaktrohre aus den Kontaktrohren abführt, **dadurch gekennzeichnet, dass** man die Gasphasenreaktion in dem Reaktor derart durchführt, dass sich die Position der höchsten Temperatur in einem Kontaktrohr (Hot-Spot) mit einer vorgegebenen Wanderungsgeschwindigkeit entlang der Längsachse des Kontaktrohrs bewegt.

2. Verfahren gemäß Anspruch 1, **dadurch gekennzeichnet, dass** sich die Position des Hot-Spots kontinuierlich in Richtung Auslassende der Kontaktrohre bewegt.

3. Verfahren gemäß einem der Ansprüche 1 oder 2, **dadurch gekennzeichnet, dass** der Hotspot eine Wanderungsgeschwindigkeit in Längsrichtung der Kontaktrohre aufweist, die im Bereich von 1 bis 50 mm pro Tag liegt.

4. Verfahren gemäß einem der Ansprüche 1 bis 3, **dadurch gekennzeichnet, dass** man eine kontinuierliche Bewegung des Hot-Spots durch kontrollierte Veränderung der Betriebsbedingungen bewirkt.

5. Verfahren gemäß Anspruch 4, **dadurch gekennzeichnet, dass** man die Betriebsbedingungen durch Teilrückführung des Produktgasgemisches in den Feedstrom bewirkt.

6. Verfahren gemäß einem der Ansprüche 2 bis 4, **dadurch gekennzeichnet, dass** man eine kontinuierliche Bewegung des Hot-Spots durch kontrollierte Deaktivierung des Katalysators in den Kontaktrohren bewirkt.

7. Verfahren gemäß Anspruch 6, **dadurch gekennzeichnet, dass** man einen Katalysator verwendet, der unter den Betriebsbedingungen einer kontrollierten Deaktivierung unterliegt.

8. Verfahren gemäß Anspruch 7, **dadurch gekennzeichnet, dass** man den Katalysator kontinuierlich chemischen deaktiviert, insbesondere zu Zugabe von Sauerstoff zu dem Feedstrom.

9. Verfahren nach einem der vorhergehenden Ansprüche **dadurch gekennzeichnet, dass** der Feedstrom einen stöchiometrischen Überschuss von Kohlenmonoxid zu Chlor von 0,1 bis 50 Mol-% aufweist.

10. Verfahren nach einem der vorhergehenden Ansprüche **dadurch gekennzeichnet, dass** der Feedstrom mit einem absoluten Druck im Bereich von 0,5 bis 20 bar zugeführt wird.

11. Verfahren nach einem der vorhergehenden Ansprüche, **dadurch gekennzeichnet, dass** die Kontaktrohre in getrennten Kühlzonen von dem wenigstens einen fluiden Wärmeträger umströmt werden.

12. Reaktor (10) zur Herstellung von Phosgen durch Gasphasenreaktion von Kohlenmonoxid und Chlor in Gegenwart eines Katalysators, der eine Vielzahl von parallel zueinander angeordneten Kontaktrohren (12) umfasst, die mit dem Katalysator befüllt sind und an beiden Enden derselben in jeweils einem Rohrboden (13, 14) eingeschweißt sind, mit Zuführung der Edukte an einem Einlassende (21) der Kontaktrohre (12) und Ableitung des gasförmigen Reaktionsgemisches an einem Auslassende (22) der Kontaktrohre (12), jeweils über eine Haube (15, 17), sowie mit Zu- bzw. Abführeinrichtungen (26, 29) für einen fluide Wärmeträger in einen Mantelraum (25) zwischen den Kontaktrohren (12), **dadurch gekennzeichnet, dass** der Reaktor (10) eine Kontrolleinrichtung (30) zur Überwachung der Wanderungsgeschwindigkeit der Position der höchsten Temperatur in den Kontaktrohren (Hot-Spot) aufweist.

13. Reaktor gemäß Anspruch 12, **dadurch gekennzeichnet, dass** die Kontrolleinrichtung (30) wenigstens eine Temperaturmesssonde (31) zur Bestimmung der Temperatur in wenigstens einem Kontaktrohr (12) an wenigstens zwei entlang der Längsachse des Kontaktrohrs voneinander beabstandeten Messstellen (Tx1, Tx2, Tx3, Tx4) und eine Auswerteeinheit (35) aufweist.

14. Reaktor gemäß einem der Ansprüche 12 oder 13, **dadurch gekennzeichnet, dass** die Kontrolleinrichtung zur Überwachung der Wanderungsgeschwindigkeit außerdem Steuerungsmittel zur Veränderung der Betriebsbedingungen des Reaktors aufweist.

15. Reaktor gemäß Anspruch 13, **dadurch gekennzeichnet, dass** die Steuerungsmittel die Zugabe einer katalysatordeaktivierenden Komponente zum Feedstrom steuern und/oder die Zugabe von Sauerstoff oder Chloroxide zum Feedstrom steuern.

*Fig. 1*

*Fig. 2*

*Fig. 3*

Fig. 4

Fig. 5

**EP 3 862 317 A1**

Europäisches Patentamt
European Patent Office
Office européen des brevets

# EUROPÄISCHER RECHERCHENBERICHT

Nummer der Anmeldung

EP 20 15 5928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/072237 A1 (BASF AG [DE]; OLBERT GERHARD [DE] ET AL.) 4. September 2003 (2003-09-04) | 1-4,9-14 | INV. C01B32/80 B01J7/00 |
| A | * Seite 7, Zeilen 30-32; Anspruch 16; Abbildungen 13, 14 * | 5-8,15 | B01J12/00 B01J8/00 B01J8/06 |
| A | WO 2004/052776 A1 (BASF AG [DE]) 24. Juni 2004 (2004-06-24) * Seite 9, Zeilen 5-14; Ansprüche; Abbildungen * | 1-15 | |
| A | EP 2 896 597 A1 (BAYER MATERIALSCIENCE AG [DE]) 22. Juli 2015 (2015-07-22) * Ansprüche * | 1-15 | |
| A | DE 10 2018 113737 A1 (MAN ENERGY SOLUTIONS SE [DE]) 12. Dezember 2019 (2019-12-12) * Absatz [0023]; Ansprüche; Abbildungen * | 1-15 | |

-----

-----

-----

-----

| | | | RECHERCHIERTE SACHGEBIETE (IPC) |
|---|---|---|---|
| | | | C01B B01J |

Der vorliegende Recherchenbericht wurde für alle Patentansprüche erstellt

| Recherchenort | Abschlußdatum der Recherche | Prüfer |
|---|---|---|
| München | 26. Juni 2020 | Serra, Renato |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................................

& : Mitglied der gleichen Patentfamilie, übereinstimmendes Dokument

EPO FORM 1503 03.82 (P04C03)

16

**ANHANG ZUM EUROPÄISCHEN RECHERCHENBERICHT
ÜBER DIE EUROPÄISCHE PATENTANMELDUNG NR.**

EP 20 15 5928

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2020

| Im Recherchenbericht angeführtes Patentdokument | Datum der Veröffentlichung | Mitglied(er) der Patentfamilie | Datum der Veröffentlichung |
|---|---|---|---|
| WO 03072237 A1 | 04-09-2003 | AT 309856 T | 15-12-2005 |
| | | AU 2003208834 A1 | 09-09-2003 |
| | | BR 0307973 A | 21-12-2004 |
| | | CN 1638856 A | 13-07-2005 |
| | | DE 50301676 D1 | 22-12-2005 |
| | | EP 1485195 A1 | 15-12-2004 |
| | | ES 2253661 T3 | 01-06-2006 |
| | | IN 237581 B | 01-01-2010 |
| | | JP 4424991 B2 | 03-03-2010 |
| | | JP 2005525986 A | 02-09-2005 |
| | | KR 20040087326 A | 13-10-2004 |
| | | US 2005118088 A1 | 02-06-2005 |
| | | US 2013072717 A1 | 21-03-2013 |
| | | WO 03072237 A1 | 04-09-2003 |
| WO 2004052776 A1 | 24-06-2004 | AT 333438 T | 15-08-2006 |
| | | AU 2003293840 A1 | 30-06-2004 |
| | | CN 1726163 A | 25-01-2006 |
| | | DE 10258153 A1 | 24-06-2004 |
| | | EP 1572582 A1 | 14-09-2005 |
| | | ES 2268471 T3 | 16-03-2007 |
| | | JP 4330536 B2 | 16-09-2009 |
| | | JP 2006509705 A | 23-03-2006 |
| | | KR 20050089822 A | 08-09-2005 |
| | | MX PA05005939 A | 08-03-2006 |
| | | PT 1572582 E | 30-11-2006 |
| | | US 2004115118 A1 | 17-06-2004 |
| | | WO 2004052776 A1 | 24-06-2004 |
| EP 2896597 A1 | 22-07-2015 | BR 112016016399 A2 | 26-09-2017 |
| | | CN 105916810 A | 31-08-2016 |
| | | EP 2896597 A1 | 22-07-2015 |
| | | EP 3097052 A1 | 30-11-2016 |
| | | HU E047052 T2 | 28-04-2020 |
| | | JP 6704852 B2 | 03-06-2020 |
| | | JP 2017505749 A | 23-02-2017 |
| | | KR 20160111390 A | 26-09-2016 |
| | | PT 3097052 T | 17-01-2020 |
| | | US 2016340196 A1 | 24-11-2016 |
| | | WO 2015110353 A1 | 30-07-2015 |
| DE 102018113737 A1 | 12-12-2019 | DE 102018113737 A1 | 12-12-2019 |
| | | WO 2019233674 A1 | 12-12-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03072237 A1
- EP 0134506 A2

**In der Beschreibung aufgeführte Nicht-Patentliteratur**

- Phosgen. Ullmann's Encyclopedia of Industrial Chemistry. VCH Verlagsgesellschaft mbH, 1991, vol. A 19, 413 ff
- Materials Selector for Hazardous Chemical, Vol. 3, Hydrochloric Acid, Hydrogen Chloride and Chlorine. MIT Publication MS-3, Elsevier Science, vol. 3
- **MICHELL et al.** Selections of carbon catalyst for the industrial manufacture of phosgene. *Catal. Sci. Technol.,* 2012, vol. 2, 2109-2115